(19) Europäisches Patentamt
European Patent Office
Office européen des brevets

(11) Veröffentlichungsnummer: **0 273 342 B1**

# (12) EUROPÄISCHE PATENTSCHRIFT

(45) Veröffentlichungstag der Patentschrift: **23.10.91**

(21) Anmeldenummer: **87118924.7**

(22) Anmeldetag: **21.12.87**

(51) Int. Cl.[5]: **C07C 215/18**, C07C 213/00, C07C 217/04, C07C 219/06, C09D 4/00

## (54) Aminogruppenhaltige Derivate von 1,3-bissubstituiertem Propanol-2, Verfahren zu ihrer Herstellung und ihre Verwendung.

(30) Priorität: **24.12.86 DE 3644371**

(43) Veröffentlichungstag der Anmeldung: **06.07.88 Patentblatt 88/27**

(45) Bekanntmachung des Hinweises auf die Patenterteilung: **23.10.91 Patentblatt 91/43**

(84) Benannte Vertragsstaaten: **AT BE CH DE ES FR GB GR IT LI NL SE**

(56) Entgegenhaltungen:
**EP-A- 0 010 670**
**EP-A- 0 135 330**
**JP-A-60 231 723**
**JP-B-52 010 847**
**US-A- 3 250 330**

**CHEMICAL ABSTRACTS, Band 88, Nr. 16, 17. April 1978, Columbus, Ohio, USA; E. D. GODDARD et al, "Polymer/surfactant interactions", S. 20, Spalte 2, Zusammenfassung Nr. 106070e**

**CHEMICAL ABSTRACTS, Band 93, Nr. 11, 15. September 1980, Columbus, Ohio, USA; M. KUTSUKATA: "N-Substituted alkylenebisdithiocarbamic acid salts", Seite 678, Spalte 1, Zusammenfassung Nummer 113 988s & JP-A-80 45633**

(73) Patentinhaber: **HOECHST AKTIENGESELLSCHAFT**
**Postfach 80 03 20**
**W-6230 Frankfurt am Main 80(DE)**

(72) Erfinder: **Lenz, Rüdiger, Dr.**
**Geisenheimer Strasse 88**
**W-6000 Frankfurt am Main 71(DE)**
Erfinder: **Walz, Gerd, Dr.**
**Pfingstbornstrasse 99**
**W-6200 Wiesbaden(DE)**
Erfinder: **Hönel, Michael, Dr.**
**Wallstrasse 24**
**W-6500 Mainz(DE)**
Erfinder: **Ziegler, Peter, Dr.**
**Essenheimer Strasse 87**
**W-6500 Mainz(DE)**

EP 0 273 342 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf neue Polyamine auf der Basis von mehrfach Aminogruppen enthaltenden Derivaten des 1,3-bissubstituierten Propanols-2, wobei diese mindestens eine primäre Aminogruppe und zusätzlich weitere N-basische Gruppierungen enthalten, Verfahren zu ihrer Herstellung und ihre Verwendung als Ausgangsprodukte für härtbare, insbesondere wasserdispergierbare und kataphoretisch abscheidbare Bindemittel auf der Basis von Aminourethanen zur Beschichtung von festen Substraten, insbesondere Metallen.

In der DE-PS 22 52 536 werden selbstvernetzende Bindemittel für die kathodische Elektrotauchlackierung beschrieben, die aus einem Polyurethanharz, das durch Umsetzung von Epoxid-Amin-Addukten, hergestellt aus einer epoxygruppenhaltigen organischen Verbindung mit einem sekundären Amin, und einem teilweise blockierten Polyisocyanat erhalten worden sind. Als Verkappungsmittel werden vorzugsweise primäre aliphatische Alkohole eingesetzt. Die Bindemittel müssen jedoch im allgemeinen bei relativ hohen Einbrenntemperaturen, z.B. 180 °C, gehärtet werden. Außerdem liegt nach dem Einbrennen in der Lackschicht immer mindestens eine tertiäre Aminogruppe pro Molekül vor, die die Filmeigenschaften negativ beeinflussen kann. Daher können derartige Produkte nicht generell bei allen gewünschten Lackformulierungen eingesetzt werden.

Kathodische Elektrotauchlacke werden auch in der DE-OS 33 11 517 und der DE-OS 33 11 518 beschrieben, bei denen Polyamine mit mindestens zwei primären Aminogruppen mit Epoxidharzen zu Epoxid-Amin-Addukten umgesetzt und die erhaltenen Reaktionsprodukte mit Alkylencarbonat unter Bildung von β-Hydroxyurethanen zur Reaktion gebracht werden. Die erhaltenen β-Hydroxyurethane benötigen im allgemeinen zwar niedrigere Härtungstemperaturen als die vorstehend beschriebenen Bindemittel, jedoch ist die Einführung der primären Aminogruppen umständlich und benötigt zusätzliche Verfahrensschritte.

In der europäischen Patentanmeldung 0 119 769 sind verschiedene Möglichkeiten angeführt, tertiäre Aminogruppen in das Grundgerüst eines Harzes einzuführen. Neben der Umsetzung von Epoxyverbindungen mit Aminkomponenten nach verschiedenen Verfahren werden auch solche von α,β-ungesättigte Carboxylgruppen enthaltenden Harzen oder Carboxylgruppen enthaltenden Harzen mit Aminokomponenten beschrieben. Die erhaltenen Verbindungen werden dann mit Alkylencarbonaten zu β-Hydroxyurethangruppen enthaltenden Bindemitteln umgesetzt. Bei der Härtung werden unter Abspaltung von Diolen, die physiologisch nicht unbedenklich sind, Urethan- oder Harnstoffbindungen gebildet. Ein Nachteil der Umsetzung von Epoxidverbindungen mit Ketiminen ist die Einhaltung von wasserfreien Bedingungen bei der Reaktion, um eine vorzeitige Hydrolyse zu vermeiden.

Es wurde nun überraschenderweise gefunden, daß mit Ausgangsverbindungen auf der Basis von mehrfach Aminogruppen enthaltenden Derivaten von 1,3-bissubstituiertem Propanol-2 durch Umsetzung mit modifizierten cyclischen Carbonaten härtbare, insbesondere wasserdispergierbare und kataphoretisch abscheidbare Bindemittel vom Typ der Aminourethane erhalten werden können, die unerwartet vorteilhafte Eigenschaften besitzen. Diese Bindemittel und daraus hergestellte Lackformulierungen, Lacke und Beschichtungen sowie Verfahren zu ihrer Herstellung unter Verwendung von Polyaminen der vorliegenden Erfindung als Ausgangsprodukte sind Gegenstand der am gleichen Tag eingereichten DE-Patentanmeldung P 36 44 370.0 , auf die hiermit Bezug genommen wird.

Die Erfindung betrifft daher aminogruppenhaltige Derivate von 1,3-bissubstituiertem Propanol-2 der Formeln (I) und/oder (II)

$$H_2N-R-\left[NH-CH_2-\underset{OH}{\underset{|}{C}}H-CH_2-NH-R\right]_p-NH_2 \qquad (I)$$

$$X-CH_2-\underset{OH}{\underset{|}{C}}H-CH_2-NH-R-NH_2 \qquad (II)$$

in denen bedeuten:

$$R = -\!\!\left[-(CR^1R^2)_n Z^1-(CR^3R^4)_m Z^2-(CR^5R^6)_l\right]_k ,$$

$Z^1,Z^2$ = O, S, NH, N-Alkyl mit bis zu 8 C-Atomen, N-Phenyl, N-Mono-, -Di- oder -Trialkylphenyl mit 1 bis 4 C-Atomen pro Alkylgruppe, einen zweiwertigen Phenylenrest, der gegebenenfalls substituiert ist, und/oder eine chemische Bindung,

$R^1$ bis $R^6$ = H, $CH_3$, $C_2H_5$, Phenyl oder Mono-, Di-oder Trialkylphenyl mit 1 bis 4 C-Atomen pro Alkylgruppe,

n,m,l = Null bis 12, vorzugsweise Null bis 6, wobei die Summe aus $n+m+l \geqq 4$, ist,

k = 1 bis 6, vorzugsweise 1 bis 3;

p = 1 bis 5, vorzugsweise 1 oder 2;

X =

$$(HO)_jA-\underset{B}{\underset{|}{N}}-,$$

worin A für einen linearen oder verzweigten aliphatischen Rest mit 2 bis 5 C-Atomen, j für 1 bis 5, vorzugsweise 1 bis 3 und B für H, $(C_1\text{-}C_4)$-Alkyl oder $(HO)_jA$- stehen,

$$=G-\underset{E}{\underset{|}{N}}-,$$

worin G für $(C_1\text{-}C_{18})$-Alkyl, vorzugsweise $(C_1\text{-}C_6)$-Alkyl, linear oder verzweigt, $(C_5\text{-}C_9)$-Cycloalkyl, das durch $(C_1\text{-}C_3)$-Alkylgruppen substituiert sein kann und E für H oder G stehen,

= L, das für $(C_5\text{-}C_{15})$-Acyloxy, vorzugsweise $(C_{10}\text{-}C_{15})$Acyloxy, steht;

ausgenommen Verbindungen der Formel II, worin R eine Gruppe der Formel $C_2H_4NHC_2H_4$ bedeutet.

Bevorzugte Polyamine der obigen Formeln (I) und (II) sind solche, bei denen bezüglich R bedeuten:

$Z^1,Z^2$ = O, NH, N-$(C_1\text{-}C_6)$Alkyl, oder eine chemische Bindung;

$R^1$ bis $R^6$ = H, $CH_3$ oder $C_2H_5$;

n,m,l = Null bis 3;

k = 1 bis 3, insbesondere 1

p = 1 oder 2.

Insbesondere ist R ein zweiwertiger, vorzugsweise nichtaromatischer Kohlenwasserstoffrest mit 1 bis 18 C-Atomen, vorzugsweise ein verzweigter oder unverzweigter Alkylenrest mit 2 bis 10 C-Atomen, insbesondere mit 2 bis 6 C-Atomen, der durch NH-Gruppen unterbrochen sein kann, oder ein Cycloalkylenrest mit 5 bis 12 C-Atomen, vorzugsweise 6 bis 10 C-Atomen, oder ein Aralkylenrest mit 7 bis 12 C-Atomen, vorzugsweise 8 bis 10 C-Atomen.

Als Beispiele für derartige Polyamine (I) seien hier genannt: 1,3-Bis-(6-aminohexyl)amino-2-propanol, Trimethyl-1,3-bis-(6-aminohexyl)amino-2-propanol, 1,3-Bis-(methyl-5-aminopentyl)amino-2-propanol, 1,3-Bis-(2-aminoethyl)-amono-2-propanol, 1,3-Bis-(3-aminopropyl-)amino-2-propanol 1,3-Bis-(5-amino-3-aza-pentyl-)amino-2-propanol.

Typische Vertreter der Formel (II) sind bei X =

$$(HO)_jA-\underset{B}{\underset{|}{N}}- \ :$$

N-[3-(6-Aminohexyl)amino-2-hydroxy]-propyliminodiethanol, N-[3-(Methyl-6-aminopentyl)amino-2-hydroxy]-propyliminodiethanol, 2-[3-(6-Aminohexyl)amino-2-hydroxy]-propyl-2-hydroxymethyl-1,3-propandiol, 2-[3-(Methyl-5-aminopentyl)amino-2-hydroxy]-propyl-2-hydroxymethyl-1,3-propandiol, 1-(6-Aminohexyl)amino-3-[N-methyl-N-(2-hydroxyethyl]amino-2-propanol, 1-(Methyl-5-aminopentyl)amino-3[N-methyl-N-(2-hydroxyethyl)]amino-2-propanol, 1-(6-Aminohexyl)amino-3[N-dodecyl-N(2-hydroxy ethyl)]amino-2-propanol, 1-(Methyl-5-aminopentyl)amino-3-[N-dodecyl-N(2-hydroxyethyl)]amino-2-propanol:

bei X =

$$G-\underset{\displaystyle E}{\overset{|}{N}}- \;:$$

1-(6-Aminohexyl)amino-3-(2-ethylhexyl)amino-2-propanol, 1-(6-Aminohexyl)amino-3-dibutylamino-2-propanol; bei X= L: 3-(6-Amino-hexyl)amino-2-hydroxypropyl-(2,2-dimethylundecanoat), 3-(Methyl-5-aminopentyl)-amino-2-hydroxypropyl-(2,2-dimethylundecanoat), wobei unter 2,2-Dimethylundecansäure auch das Säuregemisch verstanden sei, wie es beispielsweise in den "Versatic-Säuren vorliegt.

Die erfindungsgemäßen Polyamine stellen im allgemeinen schwerflüchtige, helle bis gelbliche oder gelbe Produkte dar, die bei Raumtemperatur viskose bis hochviskose Flüssigkeiten bilden oder pastös oder wachsartig sein können und verhältnismäßig gut in Wasser sowie in Alkoholen löslich sind. Ihre Aminzahl, die z.B. bei ihrer Verwendung zur Herstellung von Aminourethanen von Bedeutung ist, liegt im allgemeinen zwischen 1400 und 100, vorzugsweise zwischen 800 und 200 mg KOH/g.

Die Erfindung betrifft weiterhin die Herstellung der Polyamine (I) und/oder (II).

Ein Verfahren zur Herstellung der Polyamine (I) besteht dabei beispielsweise darin, bis-primäre Amine der Formel (III),

$H_2N-R-NH_2$ (III),

in der R die obige Bedeutung hat, mit einem Propanderivat der Formel (IV)

$$X - CH_2 - \underset{\displaystyle Y^1}{\overset{}{CH}} - CH_2 - Y^2 \qquad (IV),$$

worin X = Halogen, vorzugsweise Cl, oder den p-Toluolsulfonatrest, und

$Y^1,Y^2$ = gemeinsam eine Epoxyfunktion bilden, oder voneinander verschieden sind und $Y^1$ für OH und $Y^2$ für X stehen, bedeutet,

umzusetzen, wobei die Umsetzung bevorzugt bei erhöhten Temperaturen unter Mitverwendung von inerten organischen Lösungsmitteln, die nicht mit Wasser mischbar sind und deren Siedepunkte vorzugsweise im Bereich von 100 bis 160 °C liegen, erfolgt.

Bevorzugte Amine der Formel (III) sind Ethylendiamin, 1,3-Propylendiamin, 1,2-Propylendiamin, 1,4-Butandiamin, 1,5-Pentandiamin, N,N'-Dimethyl-N,N'-bis(aminopropyl)-ethylendiamin, N-Methyldipropylentriamin, besonders bevorzugt sind 1,6-Hexandiamin, dessen Methylengruppen zusätzlich durch eine oder zwei Methyl-oder Ethylgruppen substituiert sein können wie z.B. Trimethylhexamethylendiamin, 2-Methylpentandiamin oder 2-Ethylbutandiamin, sowie 6,6'-Imino-bis-hexylamin, 4,7-Dioxadecan-1,10-diamin, 4,9-Dioxadodecan-1,12-diamin, 4,7,10-Trioxatridecan-1,13-diamin, Polyoxypropylendiamin (vorzugsweise mit mittlerem Molgewicht von ca. 200-400),-ferner können Diethylentriamin, Dipropylentriamin sowie höhere homologe Polyamine, wie z.B. Pentaethylenhexamin eingesetzt werden.

Besonders bevorzugtes Propanderivat der Formel (IV) ist Epichlorhydrin.

Ein Verfahren zur Herstellung der Polyamine (II) mit X=

$$(HO)_J A-\underset{\displaystyle B}{\overset{|}{N}}- \quad \text{oder} \quad G-\underset{\displaystyle E}{\overset{|}{N}}-$$

besteht darin, daß man Amine der Formel

X - H (V)

in der X die vorstehende Bedeutung hat zunächst mit einem Propanderivat (IV) und anschließend mit einem bis-primären Amin der Formel (III) umsetzt, wobei die Umsetzungen gleichfalls bevorzugt bei erhöhten Temperaturen unter Mitverwendung von inerten organischen Lösungsmitteln, die nicht mit Waser mischbar sind und deren Siedepunkte vorzugsweise im Bereich von 100 bis 160 °C liegen, erfolgen.

Bevorzugte Amine der Formel (V) sind bei X=

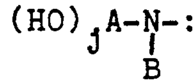

Monoethanolamin, Diethanolamin, Mono-, Di-(n oder iso)-propanolamin, Neopentanolamin, Methylethanolamin, 2-(2-Aminoethoxy)-ethanol, 3-Amino-propyl-trialkoxysilan (alkoxy = methoxy-, ethoxy, tridecyloxy-), 2-Amino-2-hydroxymethyl-1,3-propandiol; bei X=

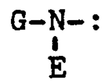

Dibutylamin, 2-Ethylhexylamin, Fettamine (z.B. Talgölfettamin), Isononyloxypropylamin, Anilin, Benzylamin.

Ein Verfahren zur Herstellung der Polyamine(II) mit X= L ist dadurch gekennzeichnet, daß man bisprimäre Amine der Formel (III) mit einem Propanderivat der Formel (VI)

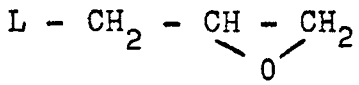 (VI),

worin L die obige Bedeutung hat, umsetzt, wobei die Umsetzung wiederum bei erhöhten Temperaturen unter Mitverwendung von inerten organischen Lösungsmitteln, die nicht mit Wasser mischbar sind und deren Siedepunkte vorzugsweise im Bereich von 100 bis 160 °C liegen, erfolgt.

Besonders bevorzugte Verbindungen der Formel (VI) sind Versaticsäureglycidylester und 2-Ethylhexylglycidylether und endständige Alkylenoxide, wie z.B. n-Butenoxid oder n-Octenoxid.

Die Umsetzung der Ausgangskomponenten erfolgt bei den obigen Verfahren nach üblichen Methoden, vorzugsweise unter Mitverwendung von inerten (d.h. die Reaktion nicht störenden) Lösungsmitteln und gegebenenfalls unter Ausschluß von Luftsauerstoff. Die Reaktion kann dabei vorzugsweise bei erhöhter Temperatur, gegebenenfalls unter Mitverwendung von Katalysatoren, durchgeführt werden bis zum Verschwinden charakteristischer Reaktionen der Ausgangskomponenten, wie z.B. der Epoxidreaktion, und/oder bis zum Erreichen der erforderlichen bzw. gewünschten Aminzahl im Endprodukt, deren Ermittlung in üblicher Weise durch Perchlorsäuretitration erfolgen kann.

Die Aufarbeitung des Reaktionsansatzes geschieht unter Eliminierung von Nebenprodukten, z.B. durch Filtration, Extraktion und/oder Destillation, sowie gegebenenfalls unter Entfernung von Lösungsmitteln sowie von überschüssigen Ausgangskomponenten. Letztere lassen sich häufig vorteilhaft destillativ entfernen unter Erhitzen des Endproduktes unter Vakuum auf geeignete Sumpftemperaturen.

Eine bevorzugte Verfahrensvariante bei der Herstellung der erfindungsgemäßen Polyamine besteht darin, daß man die Umsetzung der Ausgangsamine insbesondere mit den Propanderivaten der Formel (IV) unter Zusatz von inerten organischen Lösungsmitteln, deren Siedepunkte bei Normaldruck vorzugsweise im Bereich von 100 bis 160 °C liegen und die nicht mit Wasser mischbar sind, bei erhöhten Temperaturen durchführt. Bevorzugte inerte Lösungsmittel sind z.B. nicht-wassermischbare Alkohole, vorzugsweise n-Butanol, oder insbesondere Alkylbenzole, wobei Toluol besonders bevorzugt ist. Die Umsetzung verläuft dabei unter fortlaufendem Rühren in einem Zweiphasensystem, dessen wäßrige Phase im wesentlichen aus konzentrierter Natronlauge besteht. Die Vorteile dieser Verfahrensweise bestehen u.a. darin, daß das Reaktionsgemisch keine Überhitzung erleidet, daß bei der Aufarbeitung des Umsetzungsproduktes das eingesetzte und auch das bei der Reaktion entstandene Wasser durch azeotrope Destillation entfernt werden kann und daß z.B. beim Einsatz von Epichlorhydrin das entstandene NaCl sich leicht durch Filtration von der organischen Lösung des Umsetzungsproduktes abtrennen läßt. Schließlich lassen sich die inerten organischen Lösungsmittel unschwer durch Destillation unter Vakuum aus dem Umsetzungsprodukt entfernen.

Die erfindungsgemäßen Polyamine (I)/(II) lassen sich einzeln oder als Gemische vorteilhaft als Ausgangsprodukte zur Herstellung von Bindemitteln auf Basis von Aminourethanen verwenden, insbesondere von härtbaren Bindemitteln, vorzugsweise von in Wasser dispergierbaren und kataphoretisch abscheidbaren härtbaren Bindemitteln, die vorteilhaft zur Beschichtung von festen Substraten verwendet werden können, insbesondere von metallischen Formkörpern, vorzugsweise von Stahlblech und von zinkphosphatiertem Stahl.

Gegenstand der Erfindung ist daher auch die Verwendung der Amine der Formeln (I) und/oder (II) als Ausgangskomponenten zur Herstellung von Bindemitteln auf Basis von Aminourethanen.

Die Erfindung wird durch die nachfolgenden Beispiele näher erläutert.

A) Aminherstellung

Beispiel 1

Herstellung von technischem 1,3-Bis-(6-aminohexyl)amino-2-propanol. (Polyamingemisch der Formel (I), mit R = $-(CH_2)_6-$und p = 1 sowie Anteilen mit p = 2 als Nebenprodukt).

In eine Mischung aus 2325 g (20 Mol) Hexamethylendiamin, 2 l Toluol und 410 g (5,1 Mol) 50 %iger wäßrige Natronlauge tropft man unter Stickstoffatmosphäre in einem Rührreaktor bei 37 bis 42 °C 463 g (5 Mol) Epichlorhydrin, was bei Eiswasserkühlung etwa 2 Stunden dauert. Man läßt 1,5 Stunden bei höchstens 45 °C und 20 Minuten bei 55 °C nachrühren. Dann kreist man das Wasser azeotrop aus und filtriert nach Zusatz von 5 g Celite bei etwa 95 °C von ausgefallenem Kochsalz ab. Aus dem Filtrat werden Toluol, dann bei 20 Torr bis zu einer Sumpftemperatur von 150 °C das überschüssige Hexamethylendiamin abdestilliert. Der Rückstand, der erst unterhalb 100 °C der Luft ausgesetzt werden sollte, ist eine hellgelbliche Schmelze, die beim Abkühlen auf Raumtemperatur zu einem weißlichen Festkörper erstarrt und das gewünschte obengenannte Polyamingemisch der Formel (I) darstellt.

| | |
|---|---|
| Ausbeute: | 1260 g (= 87 % d. Theorie, bezogen auf Epichlorhydrin). |
| Schmelzbereich: | 50 - 53 °C |
| Aminzahl: | 782 mg KOH/g (berechnet: 779). |

Ermittlung der Produktverteilung:

Es werden Hexamethylendiamin und die Endprodukte aus den Beispielen 1 und 2 jeweils mit überschüssigem Ethylencarbonat umgesetzt. Die resultierenden Bis-hydroxyurethane werden durch Gelpermeationschromatographie analysiert mit folgendem Ergebnis:

Das Endprodukt aus Beispiel 1 besteht aus

| | |
|---|---|
| 7 Gew.-% | Hexamethylendiamin, |
| 70 Gew.-% | Verbindung der Formel (I) mit R = $-(CH_2)_6-$ und p = 1, |
| 23 Gew.-% | einer höhermolekularen Substanz, die dem Molgewicht nach der Verbindung der Formel (I) mit R = $-(CH_2)_6-$ und p = 2 entspricht, nämlich |

$H_2N-(CH_2)_6-NH-CH_2-CHOH-CH_2-NH-(CH_2)_6-NH-CH_2-CHOH-CH_2-NH-(CH_2)_6-NH_2$ .

Das umkristallisierte Endprodukt aus Beispiel 2 besteht zu praktisch 100 Gew.-% aus dem Polyamin der Formel (I) mit R = $-(CH_2)_6-$ und p = 1.

Beispiel 2

Herstellung von reinem 1,3-Bis-(6-aminohexyl)amino-2-propanol (Polyamin der Formel (I), mit R = $-(CH_2)_6-$ und p = 1).

Analog der Vorschrift in Beispiel 1 werden 2352 g (20 Mol) Hexamethylendiamin mit 82 g (1,05 Mol) 50 %iger Natronlauge und 92,6 g (1 Mol) Epichlorhydrin umgesetzt. Man erhält 275 g Rohprodukt (Ausbeute = 95,5 % der Theorie), das man aus Ethylacetat mit 10 % Ethanol zum reinen Polyamin der oben genannten Formel (I) umkristallisiert.

Schmelzpunkt: 53 - 55 °C; Aminzahl: 780 ng KOH/g.

Elementaranalyse für $C_{15}H_{36}N_4O$ (Molgew.= 288,48):

| | | | |
|---|---|---|---|
| ber. | C 62,45 % | H 12,58 % | N 19,42 % |
| gef. | C 62,7 % | H 13,0 % | N 19,5 % |

Beispiel 3

Herstellung einer Polyaminmischverbindung der Formel (I), mit R = $-(CH_2)_6-$ und $-C_6H_9(CH_3)_3-$ , p = 1-2, (Formalbezeichnung: Trimethyl-1,3-bis-(6-aminohexyl)amino-2-propanol).

In der in Beispiel 1 beschriebenen Apparatur werden zu einer Mischung aus 1162 g (10 Mol) Hexamethylendiamin, 1582 g (10 Mol) Trimethylhexamethylendiamin, 1,5 1 Toluol und 410 g (5,1 Mol) 50 %iger Natronlauge analog der Vorschrift in Beispiel 1 unter Stickstoff 463 g (5 Mol) Epichlorhydrin getropft. Die Umsetzung wird wie in Beispiel 1 beschrieben durchgeführt, jedoch wird der Aminüberschuß bis zu einer Sumpftemperatur im Reaktionsgemisch von 175 °C bei 20 Torr abdestilliert. Der Rückstand bildet eine bei Raumtemperatur weißliche, trüb werdende und leicht dickflüssige Schmelze mit einer Aminzahl von 680 mg KOH/g. Die Aminzahl entspricht der Theorie für das gewünschte Reaktionsprodukt. Die Ausbeute beträgt 1485 g (= 90 % d. Theorie).

Beispiel 4

Herstellung einer Polyaminmischverbindung der Formel (I), mit R = $-(CH_2)_6-$ , $-C_6H_9(CH_3)_3-$ und $-(CH_2)_6NH(CH_2)_6-$ , p = 1-2.

Die Herstellung erfolgt analog Beispiel 3, jedoch unter zusätzlicher Mitverwendung von 6,6'-Iminobishexylamin.

In der Apparatur und nach der Vorschrift von Beispiel 1 wird unter Stickstoff eine Mischung aus 344 g (1,6 Mol) 6,6'-Iminobishexylamin, 92,9 g (0,8 Mol) Hexamethylendiamin und 126,5 g (0,8 Mol) Trimethylhexamethylendiamin in 300 ml Toluol und 66 g (0,82 Mol) 50 %iger Natronlaufe mit 74 g (0,8 Mol) Epichlorhydrin umgesetzt. Die Umsetzung wird wie in Beispiel 1 beschrieben durchgeführt und der Aminüberschuß bis 180 °C Sumpftemperatur bei 20 Torr abdestilliert. Es wird eine bei Raumtemperatur zähflüssige Masse als Reaktionsprodukt erhalten, die außer der gewünschten Polyaminmischverbindung noch den nicht umgesetzten Anteil an 6,6'-Iminobishexylamin enthält, der jedoch die erfindungsgemäße Verwendung des Produkts nicht beeinträchtigt.
Ausbeute: 431 g (= 86,5 % d. Theorie)
Aminzahl: 705 mg KOH/g (berechnet: 720).

Beispiel 5

Herstellung von 1,3-Bis-(methyl-5-aminopentyl)amino-2-propanol. (Polyamingemisch der Formel (I), mit R = $-C_5H_9(CH_3)-$ , p = 1-2).

Analog Beispiel 1 werden 2325 g (20 Mol) 2-Methylpentamethylendiamin in 1,5 1 Toluol mit 463 g (5 Mol) Epichlorhydrin in Gegenwart von 410 g (5,1 Mol) 50 %iger wäßriger Natronlauge umgesetzt. Nach Abdestillieren des Lösungsmittels und des überschüssigen Amins erhält man das gewünschte Reaktionsprodukt als blaßgelbes Öl.
Ausbeute: 1300 g (= 89 % d. Theorie)
Aminzahl: 783 mg KOH/g (berechnet: 779).

Beispiel 6

Herstellung von 3-(6-Aminohexyl)amino-2-hydroxypropyl-(2,2-dimethylundecanoat).
(Polyamin der Formel (II), mit R = $-(CH_2)_6-$ , L = $(C_{10}-C_{15})$-Acyloxy, verzweigt).

In einer Rührapparatur wie in Beispiel 1 beschrieben tropft man unter Stickstoffatmosphäre zu 290 g (2,5 Mol) Hexamethylendiamin in 300 ml Toluol bei etwa 50 °C 130 g (0,5 Mol gemäß Epoxidgehalt) handelsübliches "Cardura" E 10 (= Glycidylester der handelsüblichen "Versatic"- [der Bruttozusammensetzung nach 2,2-Dimethylundecan-]Säure) und rührt das Gemisch unter Fortsetzung der Umsetzung bei max. 70 °C noch solange nach, bis die Epoxidbestimmung negativ ist. Nach Abdestillieren von Lösungsmittel und Aminüberschuß (Sumpftemperatur bis 150 °C bei 20 Torr) werden 185 g (= 98 % der Theorie) des gewünschten Reaktionsproduktes als gelbliches Öl erhalten.
Aminzahl: 305 mg KOH/g (berechnet: 298).

Beispiel 7

Herstellung einer Polyaminmischverbindung der Formel (II) mit R = $-(CH_2)_6-$ , $-C_6H_9(CH_3)_3-$ , L= $(C_{10}-C_{15})$-Acyloxy, verzweigt.

Analog Beispiel 6 tropft man unter Stickstoffatmosphäre zu einer Mischung aus 290 g (2,5 Mol) Hexamethylendiamin, 360 g (2,5 Mol) Trimethylhexamethylendiamin und 600 ml Toluol bei etwa 50 °C 260 g (1 Mol) Cardura E 10 und rührt das Gemisch unter Fortsetzung der Umsetzung bei max. 70 °C noch solange nach, bis die Epoxidbestimmung negativ ist. Nach Abdestillieren von Lösungsmittel und Aminüberschuß (Sumpftemperatur bis 175 °C bei 20 Torr) werden 396 g (= prakt. 100 % der Theorie) des gewünschten Reaktionsproduktes als gelbliches Öl erhalten.
Aminzahl: 289 mg KOH/g (berechnet: 283).

Beispiel 8
Herstellung von 3-(Methyl-5-aminopentyl)amino-2-hydroxypropyl-(2,2-dimethylundecanoat). (Polyamin der Formel (II), mit R = $-C_5H_9(CH_3)-$ , L = ($C_{10}$-$C_{15}$)-Acyloxy, verzweigt).

Analog Beispiel 6 werden 290 g (2,5 Mol) 2-Methylpentamethylendiamin in 300 ml Toluol mit 130 g (0,5 Mol) Cardura E 10 umgesetzt. Man erhält das gewünschte Reaktionsprodukt als gelbliches Öl.
Ausbeute: 183 g (= 97 % der Theorie)
Aminzahl: 303 mg KOH/g (berechnet: 298).

Beispiel 9
Herstellung von N-[3-(6-Aminohexyl)amino-2-hydroxy]propyliminodiethanol.
(Polyaminopolyol der Formel (II), mit R = $-(CH_2)_6-$, A = $-(CH_2)_2-$j = 1, B = $-C_2H_4OH$).

In einer Rührapparatur unter Stickstoffatmosphäre tropft man zu 420, 6 g (4 Mol) Diethanolamin in 240 g Isopropanol bei 33-37 °C 185,2 g (2 Mol) Epichlorhydrin und hält anschließend das Reaktionsgemisch solange bei dieser Temperatur, bis der Epoxidgehalt auf 0 abgesunken ist. Die Aminzahl darf dabei nicht unter 175 mg KOH/g sinken. Das resultierende Umsetzungsprodukt dient als "Vorprodukt" und wird in einer Rührapparatur unter Stickstoffatmosphäre in eine Mischung aus 1392 g (12 Mol) Hexamethylendiamin, 1 l Toluol und 160 g (2 Mol) 50 %iger wäßrige Natronlauge bei 38-42 °C getropft. Nach beendeter Umsetzung destilliert man Isopropanol/Wasser, dann Isopropanol/Toluol bis zur Siedetemperatur des Toluols aus, filtriert von ausgeschiedenem NaCl ab und entfernt dann das restliche Toluol und den Aminüberschuß durch Destillation bis zu einer Sumpftemperatur von 150 °C bei 20 Torr. Es verbleiben 982 g (= 88,6 % der Theorie) des gewünschten Reaktionsproduktes als gelbes Öl.
Aminzahl: 590 mg KOH/g (berechnet: 607).

Beispiel 10
Herstellung eines Polyaminopolyols der Formel (II), mit R = $-(CH_2)_6-$ , $C_6H_9(CH_3)_3-$ , A = $-(CH_2)_2-$ , j = 1, B = $-C_2H_4OH$.

Analog Beispiel 9 tropft man das "Vorprodukt" aus Beispiel 9 zu einem Gemisch aus 696 g (6 Mol) Hexamethylendiamin und 948 g (6 Mol) Trimethylhexamethylendiamin in 1 l Toluol und 160 g (2 Mol) 50 %iger Natronlauge in der entsprechenden Vorlage bei 38-42 °C. Das Reaktionsgemisch wird wie in Beispiel 9 beschrieben aufgearbeitet und schließlich bis zu einer Sumpftemperatur von 175 °C bei 20 Torr destilliert. Man erhält 977 g (= 82 % der Theorie) des gewünschten Reaktionsproduktes als orangefarbenes Öl.
Aminzahl: 535 mg KOH/g (berechnet: 564).

Beispiel 11
Herstellung von N-[3-(Methyl-5-aminopentyl)amino-2-hydroxy]-propyliminodiethanol.
(Polyaminopolyol der Formel (II), mit R = $-C_5H_9(CH_3)-$ , A = $-(CH_2)_2-$ , j = 1, B = $-C_2H_4OH$).

Analog Beispiel 9 tropft man das "Vorprodukt" aus Beispiel 9 zu einem Gemisch aus 1392 g (12 Mol) 2-Methylpentamethylendiamin in 1 l Toluol und 160 g (2 Mol) 50 %iger Natronlauge in der entsprechenden Vorlage bei 38-42 °C und verfährt weiter wie in Beispiel 9 beschrieben. Man erhält schließlich 985 g (= 89 % der Theorie) des gewünschten Reaktionsproduktes als gelbes Öl.
Aminzahl: 593 mg KOH/g (berechnet: 607).

Beispiel 12
Herstellung von 2-[3-(6-Aminohexyl)amino-2-hydroxy]propyl-2-hydroxymethyl-1,3-propandiol.
(Polyaminopolyol der Formel (II), mit R = $-(CH_2)_6-$ , B = H, A = verzweigtes $C_4$-Alkyl, j = 3).

121,2 g (1 Mol) Trispuffer (= Tris-(hydroxymethyl)-methanamin) werden in 400 g Methanol unter Rückfluß gekocht und dabei innerhalb von 30 Minuten mit 92,5 g (1 Mol) Epichlorhydrin versetzt. Man läßt noch ca. 50 Minuten bei 60 °C nachrühren, bis die Epoxidbestimmung den Wert O ergibt, die Aminzahl aber nicht unter 90 mg KOH/g fällt. Das resultierende Umsetzungsprodukt dient als "Vorprodukt" und wird

in einer Rührapparatur unter Stickstoffatmosphäre in eine Mischung aus 696 g (6 Mol) Hexamethylendiamin und 40 g (1 Mol) Natriumhydroxid in 300 ml Methanol bei 38-42 °C getropft.

Anschließend destilliert man das Methanol ab, setzt 600 ml Toluol zu und destilliert das Reaktionswasser azeotrop ab. Danach wird von ausgefallenem NaCl abfiltriert und das Toluol und der Aminüberschuß werden destillativ entfernt (Sumpftemperatur bis 150 °C bei 20 Torr). Es verbleiben 230 g (= 78% der Theorie) des gewünschten Reaktionsproduktes als gelbliches Öl.
Aminzahl: 560 mg KOH/g (berechnet: 574).

Beispiel 13
Polyaminopolyol der Formel (II) mit R = $-(CH_2)_6)-$, $C_6H_9(CH_3)_3-$, B = H, A = verzweigtes $C_4$-Alkyl, j = 3.

Analog Beispiel 12 tropft man das "Vorprodukt" aus Beispiel 12 zu dem vorgelegten Gemisch aus 348 g (3 Mol) Hexamethylendiamin und 474 g (3 Mol) Trimethylhexamethylendiamin in 40 g (1 Mol) Natriumhydroxid in 300 ml Methanol. Nach Aufarbeitung des Reaktionsgemisches analog Beispiel 12 und Destillation bis zu einer Sumpftemperatur von 175 °C bei 20 Torr verbleiben 249 g (= 79 % der Theorie) des gewünschten Reaktionsproduktes als Gelbliches Öl.
Aminzahl: 528 mg KOH/g (berechnet: 536).

Beispiel 14
Herstellung von 2-[3-(Methyl-5-aminopentyl)amino-2-hydroxy]-propyl-2-hydroxymethyl-1,3-propandiol.
(Polyaminopolyol der Formel (II), mit R = $-C_5H_9(CH_3)-$, B = H, A = verzweigtes $C_4$-Alkyl, j = 3).

Analog Beispiel 12 tropft man das "Vorprodukt" aus Beispiel 12 zu dem vorgelegten Gemisch aus 696 g (6 Mol) 2-Methylpentamethylendiamin in 40 g (1 Mol) NaOH in 300 ml Methanol. Nach Aufarbeitung des Reaktionsgemisches analog Beispiel 12 und Destillation bis zu einer Sumpftemperatur von 150 °C bei 20 Torr verbleiben 235 g (= 80 % der Theorie) des gewünschten Reaktionsproduktes als gelbliches Öl.
Aminzahl: 562 mg KOH/g (berechnet: 574).

**Patentansprüche**

**Patentansprüche für folgende Vertragsstaaten : AT, BE, CH, DE, FR, GB, GR, IT, LI, NL, SE**

**1.** Aminogruppenhaltige Derivate von 1,3-bissubstituiertem Propanol-2 der Formeln (I) und/oder (II)

$$H_2N-R-\left[NH-CH_2-\underset{\displaystyle OH}{\underset{|}{C}H}-CH_2-NH-R\right]_p-NH_2 \qquad (I)$$

$$X-CH_2-\underset{\displaystyle OH}{\underset{|}{C}H}-CH_2-NH-R-NH_2 \qquad (II)$$

in denen bedeuten:

$$R = \left[(CR^1R^2)_n Z^1 (CR^3R^4)_m Z^2 (CR^5R^6)_l\right]_k ,$$

| | |
|---|---|
| $Z^1$, $Z^2$ = | O, S, NH, N-Alkyl mit bis zu 8 C-Atomen, N-Phenyl, N-Mono-, -Di- oder -Trialkylphenyl mit 1 bis 4 C-Atomen pro Alkylgruppe, einen zweiwertigen Phenylenrest, der gegebenenfalls substituiert ist, und/oder eine chemische Bindung, |
| $R^1$ bis $R^6$ = | H, $CH_3$, $C_2H_5$, Phenyl oder Mono-, Di-oder Trialkylphenyl mit 1 bis 4 C-Atomen pro Alkylgruppe, |
| n,m,l = | Null bis 12, wobei die Summe aus $n + m + l \geqq 4$ ist, |

k = 1 bis 6;
p = 1 bis 5;
X =

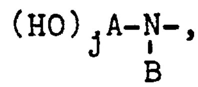

worin A für einen aliphatischen Rest mit 2 bis 5 C-Atomen, j für 1 bis 5 und B für H, $(C_1$-$C_4)$-Alkyl oder $(HO)_jA$- stehen

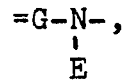

worin G für $(C_1$-$C_{18})$-Alkyl, $(C_5$-$C_9)$Cycloalkyl, das durch $(C_1$-$C_3)$-Alkylgruppen substituiert sein kann und E für H oder G stehen,

= L, das für $(C_5$-$C_{15})$-Acyloxy steht;

ausgenommen Verbindungen der Formel II, worin R eine Gruppe der Formel $C_2H_4NHC_2H_4$ bedeutet.

2. Aminogruppenhaltige Derivate gemäß Anspruch 1, dadurch gekennzeichnet, daß in den Formeln (I)/(II) bedeuten:

$Z^1$, $Z_2$ = O, NH, N-$(C_1$-$C_6)$Alkyl, oder eine chemische Bindung;
$R^1$ bis $R^6$ = H, $CH_3$ oder $C_2H_5$;
n,m,l = Null bis 6;
k = 1 bis 3;
p = 1 oder 2.

3. Aminogruppenhaltige Derivate gemäß Anspruch 1 und/oder 2, dadurch gekennzeichnet, daß R für einen zweiwertigen Kohlenwasserstoffrest mit 1 bis 18 C-Atomen steht, der durch NH-Gruppen unterbrochen sein kann.

4. Aminogruppenhaltige Derivate gemäß mindestenseinem der Ansprüche 1 bis 3, dadurch gekennzeichnet, daß R für einen Rest aus einer Verbindung der Gruppe 1,6-Hexandiamin, dessen Methylgruppen gegebenenfalls zusätzlich durch eine oder zwei Methyl- oder Ethylgruppen substituiert sind, Trimethylhexamethylendiamin, 2-Methylpentandiamin, 2-Ethylbutandiamin, 6,6'-Imino-bis-hexylamin, 4,7-Dioxadecan-1,10-diamin, 4,9-DIOXADODECAN-1,12-diamin, 4,7,10-Trioxatridecan-1,13-diamin oder Polyoxypropylendiamin mit mittlerem Molgewicht von ca. 200 - 400 steht.

5. Aminogruppenhaltige Derivate gemäß mindestens einem der Ansprüche 1 bis 4, dadurch gekennzeichnet, daß p in Formel (I) 1 oder 2 bedeutet.

6. Verfahren zur Herstellung der aminogruppenhaltigen Derivate von 1,3-bissubstituiertem Propanol-2 der Formel (I) gemäß mindestens einem der Ansprüche 1 bis 5, dadurch gekennzeichnet, daß man bisprimäre Amine der Formel (III)

$H_2N$-R-$NH_2$ (III),

in der R die Bedeutung gemäß Anspruch 1 hat, mit einem Propanderivat der Formel (IV),

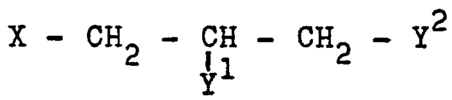 (IV),

worin X = Halogen, vorzugsweise Cl, oder den p-Toluolsulfonatrest, und

$Y^1, Y^2$ = gemeinsam eine Epoxyfunktion bilden, oder voneinander verschieden sind und $Y^1$ für OH und $Y^2$ für X stehen, bedeutet,

umsetzt.

**7.** Verfahren zur Herstellung der aminogruppenhaltigen Derivate von 1,3-bissubstituiertem Propanol-2 der Formel (II) gemäß mindestens einem der Ansprüche 1 bis 5, in der X für

$$(HO)_J A-\underset{B}{\underset{|}{N}}- \quad \text{oder} \quad G-\underset{E}{\underset{|}{N}}-$$

steht, dadurch gekennzeichnet, daß man Amine der Formel

X - H (V)

in der X die vorstehende Bedeutung hat zunächst mit einem Propanderivat (IV) und anschließend mit einem bis-primären Amin der Formel (III) umsetzt.

**8.** Verfahren zur Herstellung der aminogruppenhaltigen Derivate von 1,3-bissubstituiertem Propanol-2 der Formel (II) gemäß mindestens einem der Ansprüche 1 bis 5, in der X für L steht, dadurch gekennzeichnet, daß man bisprimäre Amine der Formel (III) mit einem Propanderivat der Formel (VI)

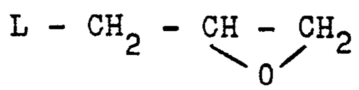

(VI)

worin L die obige Bedeutung hat, umsetzt.

**9.** Verfahren nach mindestens einem der Ansprüche 6 bis 8, dadurch gekennzeichnet, daß die Umsetzung bei erhöhten Temperaturen unter Mitverwendung von inerten organischen Lösungsmitteln, die nicht mit Wasser mischbar sind und deren Siedepunkte im Bereich von 100 bis 160 °C liegen, erfolgt.

**10.** Verfahren nach Anspruch 6 und/oder 7, dadurch gekennzeichnet, daß das Propanderivat (IV) Epichlorhydrin bedeutet.

**11.** Verfahren nach Anspruch 8, dadurch gekennzeichnet, daß das Propanderivat (VI) Versaticsäureglycidylester oder 2-Ethylhexylglycidylether darstellt.

**12.** Verwendung der Amine der Formeln (I) und/oder (II) nach einem oder mehreren der Ansprüche 1 bis 5 oder erhalten nach einem oder mehreren der Ansprüche 6 bis 11 als Ausgangskomponenten zur Herstellung von Bindemitteln auf Basis von Aminourethanen.

**Patentansprüche für folgenden Vertragsstaat : ES**

**1.** Verfahren zur Herstellung aminogruppenhaltigen Derivaten von 1,3-bissubstituiertem Propanol-2 der Formel (I)

$$H_2N-R-\left[NH-CH_2-\underset{OH}{\underset{|}{C}}H-CH_2-NH-R\right]_p-NH_2 \qquad (I)$$

in der bedeuten:

$$R = \left[(CR^1R^2)_n Z^1-(CR^3R^4)_m Z^2-(CR^5R^6)_l\right]_k \quad ,$$

| | |
|---|---|
| $Z^1, Z^2$ = | O, S, NH, N-Alkyl mit bis zu 8 C-Atomen, N-Phenyl, N-Mono-, -Di- oder -Trialkylphenyl mit 1 bis 4 C-Atomen pro Alkylgruppe, einen zweiwertigen Phenylenrest, der gegebenenfalls substituiert ist, und/oder eine chemische Bindung, |
| $R^1$ bis $R^6$ = | H, $CH_3$, $C_2H_5$, Phenyl oder Mono-, Di-oder Trialkylphenyl mit 1 bis 4 C-Atomen pro Alkylgruppe, |
| n,m,l = | Null bis 12, wobei die Summe aus $n+m+1 \geqq 4$ ist, |
| k = | 1 bis 6; |
| p = | 1 bis 5; |

dadurch gekennzeichnet, daß man bis-primäre Amine der Formel (III)

$H_2N\text{-}R\text{-}NH_2$ (III),

in der R die obige Bedeutung hat, mit einem Propanderivat der Formel (IV),

$$X - CH_2 - \underset{\displaystyle Y^1}{\underset{|}{CH}} - CH_2 - Y^2 \qquad \text{(IV)},$$

worin X = Halogen, vorzugsweise Cl, oder den p-Toluolsulfonatrest, und

$Y^1, Y^2$ = gemeinsam eine Epoxyfunktion bilden, oder voneinander verschieden sind und $Y^1$ für OH und $Y^2$ für X stehen, bedeutet,

umsetzt.

**2.** Verfahren zur Herstellung von aminogruppenhaltigen Derivaten von 1,3-bissubstituiertem Propan-2 der Formel (II)

$$X\text{-}CH_2\text{-}\underset{\displaystyle OH}{\underset{|}{CH}}\text{-}CH_2\text{-}NH\text{-}R\text{-}NH_2 \qquad \text{(II)}$$

in der R die Bedeutung gemäß Anspruch 1 hat und X bedeutet

$$(HO)_jA\text{-}\underset{\displaystyle B}{\underset{|}{N}}\text{-},$$

worin A für einen aliphatischen Rest mit 2 bis 5 C-Atomen, j für 1 bis 5 und B für H, $(C_1\text{-}C_4)$-Alkyl oder $(HO)_jA$- stehen, oder

$$=G\text{-}\underset{\displaystyle E}{\underset{|}{N}}\text{-},$$

worin G für $(C_1\text{-}C_8)$-Alkyl, $(C_5\text{-}C_9)$Cycloalkyl, das durch $(C_1\text{-}C_3)$-Alkylgruppen substituiert sein kann und E für H oder G stehen,

= L, das für $(C_5\text{-}C_{15})$-Acyloxy steht;

ausgenommen Verbindungen der Formel II, worin R eine Gruppe der Formel $C_2H_4NHC_2H_4$ bedeutet; dadurch gekennzeichnet, daß man Amine der Formel

X - H (V)

in der X die vorstehende Bedeutung hat, zunächst mit einem Propanderivat (IV) und anschließend mit einem bis-primären Amin der Formel (III) umsetzt.

3. Verfahren nach Anspruch 2, wobei X in der Formel (II) für ($C_2$-$C_8$)-Alkoxy oder für ($C_5$-$C_{15}$)-Acyloxy steht, dadurch gekennzeichnet, daß man bis-primäre Amine der Formel (III) mit einem Propanderivat der Formel (VI)

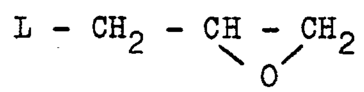

(VI)

worin L die obige Bedeutung hat, umsetzt.

4. Verfahren nach mindestens einem der Ansprüche 1 bis 3, dadurch gekennzeichnet, daß die Umsetzung bei erhöhten Temperaturen unter Mitverwendung von inerten organischen Lösungsmitteln, die nicht mit Wasser mischbar sind und deren Siedepunkte im Bereich von 100 bis 160 °C liegen, erfolgt.

5. Verfahren nach Anspruch 1 und/oder 2, dadurch gekennzeichnet, daß das Propanderivat (IV) Epichlorhydrin bedeutet.

6. Verfahren nach Anspruch 3, dadurch gekennzeichnet, daß das Propanderivat (VI) Versaticsäureglycidylester oder 2-Ethylhexylglycidylether darstellt.

7. Verfahren nach mindestens einem der Ansprüche 1 bis 6, dadurch gekennzeichnet, daß in den Formeln (I)/(II) bedeuten:

| | |
|---|---|
| $Z^1$,$Z_2$ = | O, NH, N-($C_1$-$C_6$)Alkyl, oder eine chemische Bindung; |
| $R^1$ bis $R^6$ = | H, $CH_3$ oder $C_2H_5$; |
| n,m,l = | Null bis 6; |
| k = | 1 bis 3; |
| p = | 1 oder 2. |

8. Verfahren nach mindestens einem der Ansprüche 1 bis 7, dadurch gekennzeichnet, daß R in den Formeln (I)/(II) für einen zweiwertigen Kohlenwasserstoffrest mit 1 bis 18 C-Atomen steht, der durch NH-Gruppen unterbrochen sein kann.

9. Verfahren nach Anspruch 8, dadurch gekennzeichnet, daß R für einen Rest aus einer Verbindung der Gruppe 1,6-Hexandiamin, dessen Methylgruppen gegebenenfalls zusätzlich durch eine oder zwei Methyl- oder Ethylgruppen substituiert sind, Trimethylhexamethylendiamin, 2-Methylpentandiamin, 2-Ethylbutandiamin, 6,6'-Imino-bis-hexylamin, 4,7-Dioxadecan-1,10-diamin, 4,9-Dioxadecan-1,10-diamin, 4,7,10-Trioxatridecan-1,13-diamin oder Polyoxypropylendiamin mit mittlerem Molgewicht von ca. 200 - 400 steht.

10. Verwendung der Amine der Formeln (I) und/oder (II), erhalten nach einem oder mehreren der Ansprüche 1 bis 9, als Ausgangskomponenten zur Herstellung von Bindemitteln auf Basis von Aminourethanen.

**Claims**
**Claims for the following Contracting States : AT, BE, CH, DE, FR, GB, GR, IT, LI, NL, SE**

1. Amino-group-containing derivatives of 1,3-bis-substituted 2-propanol, of the formulae (I) and/or (II)

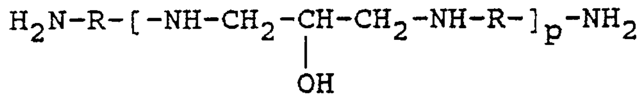 (I)

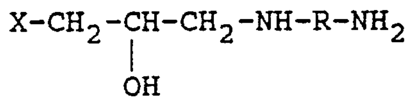 (II)

in which

| | |
|---|---|
| R | $= \{(CR^1R^2)_nZ^1(CR^3R^4)_mZ^2(CR^5R^6)_l\}_k$ |
| $Z^1$, $Z^2$ | = O, S, NH, N-alkyl containing up to 8 carbon atoms, N-phenyl, N-mono-, N-di- or N-trialkyl-phenyl containing 1 to 4 carbon atoms per alkyl group, a divalent phenylene radical which is optionally substituted, and/or a chemical bond, |
| $R^1$ to $R^6$ | = H, $CH_3$, $C_2H_5$, phenyl or mono-, di- or trialkylphenyl containing 1 to 4 carbon atoms per alkyl group, |
| n, m, l | = 0 to 12, the sum of n + m + l being ≧ 4, |
| k | = 1 to 6, |
| p | = 1 to 5, and |
| x | = |

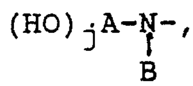

in which A stands for an aliphatic radical containing 2 to 5 carbon atoms, j stands for 1 to 5, and B stands for H, $(C_1-C_4)$-alkyl or $(HO)_jA$-, or

=
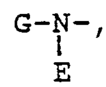
=

in which G stands for $(C_1-C_{18})$alkyl, $(C_5-C_9)$-cycloalkyl which may be substituted by $(C_1-C_3)$-alkyl groups and E stands for H or G; or

= L, which stands for $(C_5-C_{15})$-acyloxy,

with the exception of compounds of the formula II where R denotes a group of the formula $C_2H_4NHC_2H_4$.

**2.** Amino-group-containing derivatives as claimed in claim 1, characterized in that, in the formulae (I)/ (II):

| | |
|---|---|
| $Z^1$ $Z^2$ | = O, NH, N-$(C_1-C_6)$alkyl or a chemical bond; |
| $R^1$ to $R^6$ | = H, $CH_3$ or $C_2H_5$; |
| n, m, l | = 0 to 6; |
| k | = 1 to 3; |
| p | = 1 or 2. |

**3.** Amino-group-containing derivatives as claimed in claim 1 and/or 2, wherein R stands for a divalent hydrocarbon radical containing 1 to 18 carbon atoms which may be interrupted by NH groups.

**4.** Amino-group-containing derivatives as claimed in at least one of claims 1 to 3, wherein R stands for a radical from a compound of the group comprising 1,6-hexane-diamine whose methyl groups are optionally substituted additionally by one or two methyl or ethyl groups, trimethylhexamethylenediamine, 2-methylpentanediamine, 2-ethylbutanediamine, 6,6'-iminobishexylamine, 4,7-dioxadecane-1,10-diamine, 4,9-dioxadodecane-1,12-diamine, 4,7,10-trioxatridecane-1,13-diamine or polyoxypropylenediamine with a mean molecular weight of approx. 200 - 400.

**5.** Amino-group-containing derivatives as claimed in at least one of claims 1 to 4, wherein p in formula (I)

denotes 1 or 2.

**6.** A process for the preparation of amino-group-containing derivatives of 1,3-bis-substituted 2-propanol of the formula (I) as claimed in at least one of claims 1 to 5, wherein bis(primary amines) of the formula (III)

$H_2N\text{-}R\text{-}NH_2$ (III)

in which R has the meaning given in claim 1, are reacted with a propane derivative of the formula (IV)

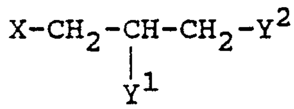 (IV)

in which
X = halogen, preferably Cl or the p-toluenesulfonate radical, and
$Y^1$, $Y^2$ = jointly form an epoxy function or are different from each other and $Y^1$ stands for OH and $Y^2$ stands for X.

**7.** A process for the preparation of the amino-group-containing derivatives of 1,3-bis-substituted 2-propanol of the formula (II) as claimed in at least one of claims 1 to 5, in which X stands for

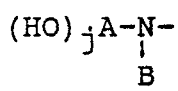 or 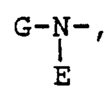,

wherein
amines of the formula

X - H (V),

in which X has the above meaning, are reacted first with a propane derivative (IV) and then with a bis-(primary amine) of the formula (III).

**8.** A process for the preparation of the amino-group-containing derivatives of 1,3-bis-substituted 2-propanol of the formula (II) as claimed in at least one of claims 1 to 5, in which X stands for L, wherein a bis(primary amine) of the formula (III) is reacted with a propane derivative of the formula (VI)

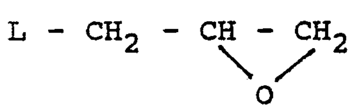 (VI),

in which L has the above meaning.

**9.** The process as claimed in at least one of claims 6 to 8, wherein the reaction is carried out at elevated temperatures, with inert organic solvents also being used which are not miscible with water and whose boiling points are in the range from 100 to 160 °C.

**10.** The process as claimed in claim 6 and/or 7, wherein the propane derivative (IV) denotes epichlorehydrin.

**11.** The process as claimed in claim 8, wherein the propane derivative (VI) is th glycidyl ester of Versatic acid or 2-ethylhexyl glycidyl ether.

**12.** The use of the amines of formulae (I) and/or (II) as claimed in one or more of claims 1 to 5 or obtained

as claimed in one or more of claims 6 to 11, as starting components for the preparation of binders based on aminourethanes.

**Claims for the following Contracting State : ES**

1. A process for the preparation of amino-group-containing derivatives of 1,3-bis-substituted 2-propanol, of the formula (I)

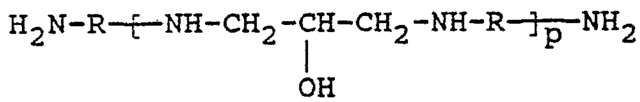 (I)

in which

| | |
|---|---|
| R | $= [(CR^1R^2)_n Z^1 (CR^3R^4)_m Z^2 (CR^5R^6)_l]_k$ |
| $Z^1$, $Z^2$ | = O, S, NH, N-alkyl containing up to 8 carbon atoms, N-phenyl, N-mono-, N-di- or N-trialkyl-phenyl containing 1 to 4 carbon atoms per alkyl group, a divalent phenylene radical which is optionally substituted, and/or a chemical bond, |
| $R^1$ to $R^6$ | = H, $CH_3$, $C_2H_5$, phenyl or mono-, di- or trialkylphenyl containing 1 to 4 carbon atoms per alkyl group, |
| n, m, l | = 0 to 12, the sum of n + m + l being $\geqq$ 4, |
| k | = 1 to 6, |
| p | = 1 to 5 |

wherein bis(primary amines) of the formula (III)

$H_2N-R-NH_2$ (III)

in which R has the above meaning, are reacted with a propane derivative of the formula (IV)

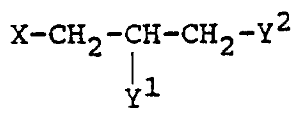 (IV)

in which

| | |
|---|---|
| X | = halogen, preferably Cl or the p-toluenesulfonate radical, and |
| $Y^1$, $Y^2$ | = jointly form an epoxy function or are different from each other and $Y^1$ stands for OH and $Y^2$ stands for X. |

2. A process for the preparation of amino-group-containing derivatives of 1,3-bis-substituted 2-propanol of the formula (II)

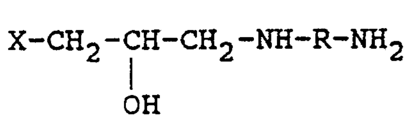 (II)

in which

| | |
|---|---|
| R | = has the meaning given in claim 1, and |
| x | = denotes |

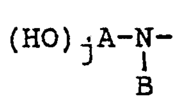,

with A denoting an aliphatic radical having 2 to 5 carbon atoms, j denoting 1 to 5 and B denoting hydrogen, ($C_1$-$C_4$)-alkyl or $(HO)_jA$, or
= denotes

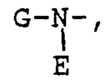

with G denoting ($C_1$-$C_8$)alkyl, ($C_5$-$C_9$)-cycloalkyl which may be substituted by ($C_1$-$C_3$)-alkyl groups, and E denoting hydrogen or G; or
= denotes L, which stands for ($C_5$-$C_{15}$)-acyloxy,

with the exception of those compounds of formula II where R denotes a group of the formula $C_2H_4NHC_2H_4$;

wherein amines of the formula

X - H (V),

in which X has the meaning given above, are reacted first with a propane derivative of the formula (IV) and then with a bis(primary amine) of the formula (III).

**3.** The process as claimed in claim 2 where X in formula (II) stands for ($C_2$-$C_8$)alkoxy of for ($C_4$-$C_{15}$)-acyloxy, wherein bis(primary amines) of the formula (III) are reacted with a propane derivative of the formula (VI)

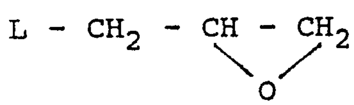 (VI),

in which L has the above meaning.

**4.** The process as claimed in at least one of claims 1 to 3, wherein the reaction is carried out at elevated temperatures, with inert organic solvents also being used which are not miscible with water and whose boiling points are in the range from 100 to 160 °C.

**5.** The process as claimed in claim 1 and/or 2, wherein the propane derivative (IV) denotes epichlorehydrin.

**6.** The process as claimed in claim 3, wherein the propane derivative (VI) is th glycidyl ester of Versatic acid or 2-ethylhexyl glycidyl ether.

**7.** The process as claimed in at least one of claims 1 to 6, wherein, in the formulae (I)/(II):

| | |
|---|---|
| $Z^1$, $Z^2$ | = O, NH, N-($C_1$-$C_6$)alkyl or a chemical bond; |
| $R^1$ to $R^6$ | = H, $CH_3$ or $C_2H_5$; |
| n, m, l | = 0 to 6; |
| k | = 1 to 3; |
| p | = 1 or 2. |

**8.** The process as claimed in at least one of claims 1 to 7, wherein, in the formulae (I)/(II), R stands for a divalent hydrocarbon radical which contains 1 to 18 carbon atoms and which may be interrupted by NH groups.

**9.** The process as claimed in claim 8, wherein R stands for a radical from a compound of the group comprising 1,6-hexane-diamine whose methyl groups are optionally substituted additionally by one or two methyl or ethyl groups, trimethylhexamethylenediamine, 2-methylpentanediamine, 2-ethylbutanediamine, 6,6'-iminobishexylamine, 4,7-dioxadecane-1,10-diamine, 4,9-dioxadodecane-1,12-diamine, 4,7,10-trioxatridecane-1,13-diamine or polyoxypropylenediamine with a mean molecular weight of approx. 200 - 400.

**10.** The use of the amines of formulae (I) and/or (II), obtained as claimed in one or more of claims 1 to 9, as starting components for the preparation of binders based on aminourethanes.

**Revendications**

**Revendications pour les Etats contractants suivants : AT, BE, CH, DE, FR, GB, GR, IT, LI, NL, SE**

**1.** Dérivés de propanols-2 aminés, bis-substitués en 1,3 qui répondent aux formules I et/ou II :

$$H_2N-R-[NH-CH_2-\underset{OH}{CH}-CH_2-NH-R]_p-NH_2 \qquad (I)$$

$$X-CH_2-\underset{OH}{CH}-CH_2-NH-R-NH_2 \qquad (II)$$

dans lesquelles :

R représente un radical

$$R = [(CR^1R^2)_nZ^1(CR^3R^4)_mZ^2(CR^5R^6)_l]_k$$

$Z^1$ et $Z^2$ représentent chacun O, S, NH, un radical N-alkyl contenant au plus 8 atomes de carbone, un radical N-phényl, un radical N-mono-, N-di- ou N-trialkylphényle dont l'alkyle ou chacun des alkyles contient de 1 à 4 atomes de carbone, un radical phénylène bivalent, éventuellement substitué, et/ou une liaison chimique,

$R^1$ à $R^6$ représentent chacun H, $CH_3$, $C_2H_5$, un phényle, un radical mono-, di- ou trialkylphényle dont l'alkyle ou chacun des alkyles contient de 1 à 4 atomes de carbone,

n, m et l représentent chacun un nombre de 0 à 12, la somme (n + m + l) étant au moins égale à 4,

k désigne un nombre de 1 à 6,

p désigne un nombre de 1 à 5, et

X représente :

un radical

$$(HO)_jA-\underset{B}{N}-$$

dans lequel A représente un radical aliphatique qui contient de 2 à 5 atomes de carbone, j désigne un nombre de 1 à 5, et B représente H, un alkyle en $C_1$-$C_4$ ou $(HO)_jA-$,

un radical

$$G-\underset{E}{N}-$$

dans lequel G représente un alkyle en $C_1$-$C_{18}$ ou un cycloalkyle en $C_5$-$C_9$ éventuellement porteur d'alkyles en $C_1$-$C_3$, et E représente H ou G, ou

un radical L qui est un acyloxy en $C_5$-$C_{15}$,
à l'exception des composés de formule II dans lesquels R représente un radical $-C_2H_4-NH-C_2H_4-$.

**2.** Dérivés aminés selon la revendication 1 caractérisés en ce que, dans les formules I/II :

| | |
|---|---|
| $Z^1$ et $Z^2$ | représentent O, NH, un radical N-($C_1$-$C_6$)-alkyl ou une liaison chimique, |
| $R^1$ à $R^5$ | représentent chacun H, $CH_3$ ou $C_2H_5$, |
| n, m et l | représentent chacun un nombre de 0 à 6, |
| k | désigne un nombre de 1 à 3, et p est égal a 1 ou à 2. |

**3.** Dérivés aminés selon l'une des revendications 1 et 2, caractérisés en ce que R représente un radical hydrocarboné bivalent, contenant de 1 à 18 atomes de carbone, qui peut être interrompu par des radicaux NH.

**4.** Dérivés aminés selon au moins une des revendications 1 à 3, caractérisés en ce que R représente un radical d'un composé pris dans l'ensemble constitué par l'hexane-diamine-1,6, les hexane-diamines-1,6 dont les radicaux méthyles portent en outre 1 ou 2 radicaux méthyles ou éthyles, la triméthyl-hexaméthylène-diamine, la méthyl-2 pentane-diamine, l'éthyl-2 butane-diamine, l'imino-6,6' bis-hexylamine, la dioxa-4,7 décane-diamine-1,10, la dioxa-4,9 dodécane-diamine-1,12, la trioxa-4,7,10 tridécane-diamine-1,13, et des poly-oxypropylène-diamines d'une masse moléculaire moyenne d'environ 200 à 400.

**5.** Dérivés aminés selon au moins une des revendications 1 à 4, caractérisés en ce que p, dans la formule I, est égal à 1 ou à 2.

**6.** Procédé pour préparer les dérivés de propanols-2 aminés bis-substitués en 1,3 qui répondent à la formule I selon au moins une des revendications 1 à 5, procédé caractérisé en ce qu'on fait réagir des amines bis-primaires répondant à la formule III :

$H_2N-R-NH_2$ (III)

dans laquelle R a la signification qui lui a été donnée à la revendication 1,
avec un dérivé du propane répondant à la formule IV :

$$X - CH_2 - \underset{\underset{Y^1}{|}}{CH} - CH_2 - Y^2 \qquad (IV)$$

dans laquelle X représente un halogène, de préférence Cl, ou un radical p-toluène-sulfonyloxy, et $Y^1$ et $Y^2$ forment ensemble une fonction époxy, ou $Y^1$ représente OH et Y2 représente X,

**7.** Procédé pour préparer les dérivés de propanols-2 aminés bis-substitués en 1,3 qui répondent à la formule II selon au moins une des revendications 1 à 5 et dans lesquels X représente

$$(HO)_jA-\underset{\underset{B}{|}}{N}- \text{ ou } G-\underset{\underset{E}{|}}{N}-,$$

procédé caractérisé en ce qu'on fait réagir des amines répondant à la formule :

X-H (V)

dans laquelle X a la signification indiquée ci-dessus, d'abord avec un dérivé du propane (IV), puis avec une amine bis-primaire de formule III.

**8.** Procédé pour préparer les dérivés de propanols-2 aminés bis-substitués en 1,3 qui répondent à la formule II selon au moins une des revendications 1 à 5 et dans lesquels X représente L, procédé

caractérisé en ce qu'on fait réagir des amines bis-primaires de formule III avec un dérivé du propane répondant à la formule VI :

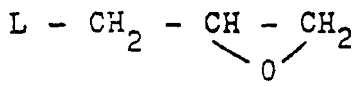

(VI)

dans laquelle L a la signification indiquée ci-dessus.

**9.** Procédé selon au moins une des revendications 6 à 8, caractérisé en ce qu'on effectue la réaction à des températures élevées et en utilisant des solvants organiques inertes qui ne sont pas miscibles à l'eau et dont les points d'ébullition se situent dans l'intervalle allant de 100 à 160 °C.

**10.** Procédé selon l'une des revendications 6 et 7, caractérisé en ce que le dérivé du propane (IV) est l'épichlorhydrine.

**11.** Procédé selon la revendication 8 caractérisé en ce que le dérivé du propane (VI) est l'ester glycidylique de l'acide Versatique ou l'oxyde d'éthyl-2 hexyle et de glycidyle.

**12.** Application des amines de formules I et/ou II selon une ou plusieurs des revendications 1 à 5, ou obtenues selon une ou plusieurs des revendications 6 à 11, comme corps de départ pour la préparation de liants à base d'amino-uréthannes.

**Revendications pour l'Etat contractant suivant : ES**

**1.** Procédé pour préparer des dérivés de propanols-2 aminés bis-substitués en 1,3 qui répondent à la formule I :

$$H_2N-R-[NH-CH_2-\underset{OH}{CH}-CH_2-NH-R]_p-NH_2 \qquad (I)$$

dans laquelle :

R représente un radical

$$[(CR^1R^2)_nZ^1(CR^3R^4)_mZ^2(CR^5R^6)_l]_k$$

$Z^1$ et $Z^2$ représentent chacun O, S, NH, un radical N-alkyl contenant au plus 8 atomes de carbone, un radical N-phényl, un radical N-mono-, N-di- ou N-trialkylphényle dont l'alkyle ou chacun des alkyles contient de 1 à 4 atomes de carbone, un radical phénylène bivalent, éventuellement substitué, et/ou une liaison chimique,

$R^1$ à $R^6$ représentent chacun H, $CH_3$, $C_2H_5$, un phényle, un radical mono-, di- ou trialkylphényle dont l'alkyle ou chacun des alkyles contient de 1 à 4 atomes de carbone,

n, m et l représentent chacun un nombre de 0 à 12, la somme (n + m + l) étant au moins égale à 4,

k désigne un nombre de 1 à 6, et

p désigne un nombre de 1 à 5, et

procédé caractérisé en ce qu'on fait réagir des amines bis-primaires répondant à la formule III :

$H_2N-R-NR_2$ (III)

dans laquelle R a la signification indiquée ci-dessus,
avec un dérivé du propane répondant à la formule IV :

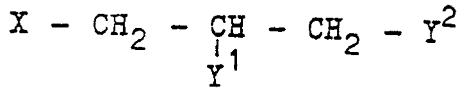 (IV)

dans laquelle X représente un halogène, de préférence Cl, ou un radical p-toluène-sulfonyloxy, et $Y^1$ et $Y^2$ forment ensemble une fonction époxy, ou $Y^1$ représente OH et $Y^2$ représente X.

**2.** Procédé pour préparer des dérivés de propanols-2 aminés bis-substitués en 1,3 qui répondent à la formule II :

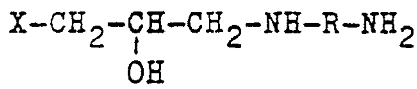 (II)

dans laquelle :

R a la signification qui lui a été donnée à la revendication 1 et

X représente :

un radical

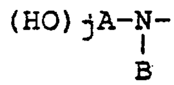

dans lequel A représente un radical aliphatique qui contient de 2 à 5 atomes de carbone, j désigne un nombre de 1 à 5, et B représente H, un alkyle en $C_1$-$C_4$ ou $(HO)_jA$-,

un radical

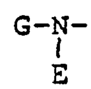

dans lequel G représente un alkyle en $C_1$-$C_{18}$, un cycloalkyle en $C_5$-$C_9$, éventuellement porteur d'alkyles en $C_1$-$C_3$, et E représente H ou G, ou

un radical L qui est un acyloxy en $C_5$-$C_{15}$,

à l'exception des composés de formule II dans lesquels R représente un radical $-C_2H_4-NH-C_2H_4-$, procédé caractérisé en ce qu'on fait réagir des amines répondant à la formule V :

X-H (V)

dans laquelle X a la signification indiquée ci-dessus, d'abord avec un dérivé du propane (IV), puis avec une amine bis-primaire de formule III.

**3.** Procédé selon la revendication 2 dans lequel le symbole X contenu dans la formule II représente un alcoxy en $C_2$-$C_8$ ou un alcyloxy en $C_5$-$C_{15}$, procédé caractérisé en ce qu'on fait réagir des amines bis-primaires de formule III avec un dérivé du propane répondant à la formule VI :

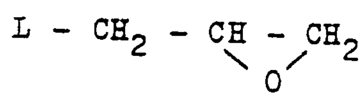 (VI)

dans laquelle L a la signification indiquée ci-dessus.

**4.** Procédé selon au moins une des revendications 1 à 3, caractérisé en ce qu'on effectue la réaction à des températures élevées et en utilisant des solvants organiques inertes qui ne sont pas miscibles à l'eau et dont les points d'ébullition se situent dans l'intervalle allant de 100 à 160 °C.

5. Procédé selon l'une des revendications 1 et 2, caractérisé en ce que le dérivé du propane (IV) est l'épichlorhydrine.

6. Procédé selon la revendication 3 caractérisé en ce que le dérivé du propane (VI) est l'ester glycidylique de l'acide Versatique ou l'oxyde d'éthyl-2 hexyle et de glycidyle.

7. Procédé selon au moins une des revendications 1 à 6, caractérisé en ce que, dans les formules I/II :
   $Z^1$ et $Z^2$ représentent O, NH, un radical N-($C_1$-$C_6$)-alkyl ou une liaison chimique,
   $R^1$ à $R^6$ représentent chacun H, $CH_3$ ou $C_2H_5$,
   n, m et l représentent chacun un nombre de 0 à 6,
   k désigne un nombre de 1 à 3, et p est égal à 1 ou à 2.

8. Procédé selon au moins une des revendications 1 à 7, caractérisé en ce que R, dans les formules I/II, représente un radical hydrocarboné bivalent qui contient de 1 à 18 atomes de carbone et qui peut être interrompu par des radicaux NH.

9. Procédé selon la revendication 8 caractérisé en ce que R représente un radical d'un composé pris dans l'ensemble constitué par l'hexane-diamine-1,6, dont les radicaux méthyles portent en outre éventuellement 1 ou 2 radicaux méthyles ou éthyles, la triméthyl-hexaméthylène-diamine, la méthyl-2 pentane-diamine, l'éthyl-2 butane-diamine; l'imino-6,6' bis-hexylamine, la dioxa-4,7 décane-diamine-1,10, la dioxa-4,9 dodécane-diamine-1,12, la trioxa4,7,10 tridécane-diamine-1,13, et des poly-oxypropylène-diamines d'une masse moléculaire moyenne d'environ 200 à 400.

10. Application des amines de formules I et/ou II qui ont été obtenues selon une ou plusieurs des revendications 1 à 9, comme corps de départ pour la préparation des liants à base d'amino-uréthannes.